# EUROPÄISCHE PATENTSCHRIFT

(11) **EP 3 335 545 B1**
(45) Veröffentlichungstag und Bekanntmachung des Hinweises auf die Patenterteilung: **12.10.2022**
(21) Anmeldenummer: 17186106.5
(22) Anmeldetag: 14.08.2017
(51) Int. Cl.: A01F 12/18, A01F 15/08

(54) **MODULARES TROMMELHAUS**
MODULAR DRUM HOUSE
CHÂSSIS MODULAIRE POUR TAMBOUR

(30) Priorität: 16.12.2016 DE 102016124576
(43) Veröffentlichungstag der Anmeldung: 20.06.2018
(73) Patentinhaber: CLAAS Selbstfahrende Erntemaschinen GmbH, 33428 Harsewinkel (DE)
(72) Erfinder: Esken, Dirk, 59494 Soest-Meckingsen (DE); Holtmann, Bernd, 48324 Sendenhorst (DE); Bußmann, Jens, 49179 Ostercappeln (DE)
(74) Vertreter: CLAAS Gruppe

(56) Entgegenhaltungen:
- EP-A1- 1 698 222
- WO-A1-2005/102026
- GB-A- 2 002 897
- US-A- 3 126 894
- US-A1- 2014 274 237

## Beschreibung

Die vorliegende Erfindung betrifft eine Gehäusewand für ein Gehäuse eines selbstfahrenden Mähdreschers, die zumindest eine erste Durchgangsöffnung zur Entnahme eines ersten Förderungs- und/oder Verarbeitungsaggregates des Mähdreschers aufweist. Die vorliegende Erfindung betrifft weiterhin ein Gehäuse mit der Gehäusewand sowie einen selbstfahrenden Mähdrescher mit dem Gehäuse.

In der Landwirtschaftstechnik werden in Abhängigkeit von dem zu erntenden Erntegut und den zu bearbeitenden Böden sowie den Erntebedingungen verschiedene Typen Mähdrescher eingesetzt. Häufig kommen Mähdrescher vom Typ einer Schüttlermaschine zum Einsatz, die ein quer zur Förderrichtung des Erntegutes angeordnetes Dreschwerk und einen diesem nachgeordneten Hordenschüttler zur Nachbearbeitung des gedroschenen Erntegutes aufweisen. Mähdrescher mit Hordenschüttler zeigen beispielsweise die Druckschriften EP 1 698 222 A1, US 2014/0274237 A1 und GB 2 002 897 A. Zudem werden häufig Mähdrescher vom Typ einer Axialrotormaschine eingesetzt. Diese Mähdrescher weisen einen Axialrotor auf, der dem Dreschwerk nachgeordnet sein kann, oder der sowohl zum Dreschen als auch zur Nachbearbeitung des gedroschenen Erntegutes vorgesehen sein kann. Axialrotormaschinen, bei denen der Axialrotor dem Dreschwerk nachgeordnet und zur Nachbearbeitung des gedroschenen Erntegutes vorgesehen ist, werden auch Hybridmaschinen genannt.

Die Druckschrift WO 2005/102026 A1 offenbart ein Gehäuse für einen Häcksler eines Mähdreschers, die Druckschrift US 3,126,894 ein Trommelgehäuse für einen Mähdrescher.

Um den Fertigungsaufwand gering zu halten, werden für beide Typen von Mähdreschern teilweise gleiche Förderungs- und/oder Verarbeitungsaggregate genutzt. Dadurch kann die Vielzahl der Bauteile gering, und die Stückzahlen der Bauteile groß gehalten werden. Die Bauteile sind dann kostengünstig herstellbar und lagerbar.

Aufgabe der vorliegenden Erfindung ist es, eine Gehäusewand für einen Mähdrescher sowie ein Gehäuse mit der Gehäusewand zu schaffen, die für verschiedene Typen Mähdrescher nutzbar und für unterschiedliche Anforderungen desselben oder der verschiedenen Mähdreschertypen verwendbar, und daher kostengünstig herstellbar und vielfältig einsetzbar sind.

Die Aufgabe wird gelöst mit einem selbstfahrenden Mähdrescher mit den Merkmalen des unabhängigen Patentanspruchs 1. Vorteilhafte Ausführungsformen sind den abhängigen Ansprüchen entnehmbar.

Dafür wird ein selbstfahrender Mähdrescher mit einem Gehäuse beinhaltend eine Gehäusewand geschaffen. Die Gehäusewand weist zumindest eine erste Durchgangsöffnung zur Entnahme eines ersten Förderungs- und/oder Verarbeitungsaggregates des Mähdreschers auf. Sie zeichnet sich dadurch aus, dass sie ein erstes Positioniermodul mit zumindest zwei ersten Anlenkpunkten aufweist, von denen in Abhängigkeit von dem Typ des Mähdreschers
- zumindest einer zum Befestigen von Komponenten einer Verstellmechanik für ein erstes Bodensegment, und/oder
- einer zum Anordnen eines zweiten, dem ersten nachgeordneten Förderungs- und/oder Verarbeitungsaggregates des Mähdreschers wählbar ist.

Die ersten Anlenkpunkte des ersten Positioniermoduls werden daher in Abhängigkeit vom Typ des Mähdreschers unterschiedlich verwendet. Dadurch kann dieselbe Gehäusewand trotz teilweise verschiedener Bodensegmente und/oder Förderungs- und/oder Verarbeitungsaggregate der verschiedenen Typen Mähdrescher verwendet werden. Weiterhin können die Anlenkpunkte desselben Typs Mähdrescher ausstattungsabhängig verschieden genutzt werden. Da die Gehäusewand typ- und ausstattungsunabhängig verwendet wird, kann sie in erheblich größeren Stückzahlen hergestellt werden. Dadurch ist sie kostengünstiger herstellbar, und der Lagerhaltungsaufwand verringert sich.

Die Gehäusewand erstreckt sich bevorzugt flächig. Sie weist weiterhin bevorzugt eine Vorderseite und eine Innenseite auf. Dabei kann sie zur Verbesserung ihrer Steifigkeit Abkantungen, Sicken und/oder Einprägungen aufweisen. Zudem kann sie mittels Streben verstärkt sein. Besonders bevorzugt ist die Innenseite in einem verbauten Zustand der Gehäusewand einem Innenraum eines Gehäuses zugewandt, welches die Gehäusewand zumindest teilweise begrenzt.

Ein solches Gehäuse umgibt bevorzugt zumindest das erste Förderungs- und/oder Verarbeitungsaggregat des Mähdreschers. Besonders bevorzugt umgibt es weitere, dem ersten Förderungs- und/oder Verarbeitungsaggregat vorgeordnete oder nachgeordnete Förderungs- und/oder Verarbeitungsaggregate. Die Förderungs- und/oder Verarbeitungsaggregate sind bevorzugt zumindest teilweise im Innenraum des Gehäuses angeordnet.

Um die Zugänglichkeit der Komponenten der Verstellmechanik sicher zu stellen, ist es bevorzugt, dass diese zumindest teilweise an der dem Innenraum abgewandten Vorderseite der Gehäusewand anordbar oder angeordnet sind.

Das erste Positioniermodul umfasst bevorzugt zumindest eine erste Aussparung, die zum Durchführen eines Verbindungsmittels vorgesehen ist. Das Verbindungsmittel erstreckt sich dann von der Vorderseite zur Innenseite, insbesondere in den Innenraum. Dadurch verbindet das Verbindungsmittel durch die Aussparung hindurch die leicht zugänglichen Komponenten an der Vorderseite mit dem Innenraum. Dadurch ist eine Verbindung der Verstellmechanik mit Komponenten der Verstellmechanik im Innenraum und/oder mit einem der im Innenraum angeordneten Förderungs- und/oder Verarbeitungsaggregate und/oder dem ersten Bodensegment realisierbar. In einer bevorzugten Ausführungsform ist das Verbindungsmittel ein Antriebsmittel, ein Abtriebsmittel oder ein Lagermittel der Verstellmechanik. Es ist besonders bevorzugt, dass das erste Positioniermodul zwei erste Aussparungen oder mehr, die jeweils zum Durchführen eines Verbindungsmittels vorgesehen sind, umfasst.

Die ersten Anlenkpunkte und die zumindest eine erste Aussparung sind bevorzugt zumindest teilweise zum Anordnen der Verstellmechanik vorgesehen. Dabei ist es besonders bevorzugt, dass die Verstellmechanik einen ersten Verstellteil sowie einen zweiten Verstellteil aufweist. Die Verstellteile sind bevorzugt zum Verstellen verschiedener Bodensegmente oder Teile der verschiedenen Bodensegmente vorgesehen.

Ganz besonders bevorzugt sind die ersten Anlenkpunkte und die zumindest eine erste Aussparung zumindest teilweise zum Anordnen des ersten Verstellteils der Verstellmechanik vorgesehen. Dabei ist es weiterhin bevorzugt, dass sie zum Verstellen des ersten Bodensegmentes oder Teilen des ersten Bodensegmentes vorgesehen sind.

Weiterhin bevorzugt weist die Gehäusewand ein zweites Positioniermodul mit zweiten Anlenkpunkten und zumindest einer zweiten Aussparung auf, die ebenfalls zumindest teilweise zum Anordnen der Verstellmechanik vorgesehen sind. Dabei ist es besonders bevorzugt, dass die zweiten Anlenkpunkte und die zumindest eine zweite Aussparung zum Anordnen des zweiten Verstellteils der Verstellmechanik genutzt wird. Besonders bevorzugt sind die zweiten Anlenkpunkte und die zumindest eine zweite Aussparung zum Verstellen eines zweiten Bodensegmentes oder Teilen des zweiten Bodensegmentes vorgesehen.

Vorzugsweise weisen der erste Verstellteil und der zweite Verstellteil dafür jeweils einen Verstellantrieb auf. Es ist aber ebenfalls bevorzugt, dass die beiden Verstellteile einen gemeinsam genutzten Verstellantrieb aufweisen. Dafür können die Anlenkpunkte und Aussparungen der beiden Positioniermodule zumindest teilweise gemeinsam genutzt werden. Weiterhin können, insbesondere zum Verstellen weiterer Bodensegmente, weitere Positioniermodule vorgesehen sein. Zudem kann die Zuordnung der Anlenkpunkte und/oder Aussparungen zu den Positioniermodulen typ- und/oder ausstattungsabhängig variieren.

Es ist weiterhin bevorzugt, dass die Gehäusewand eine Verstärkungswand umfasst, die in Abhängigkeit von dem Typ des Mähdreschers wählbar und zumindest im Bereich der ersten Anlenkpunkte vorgesehen ist. Die Verstärkungswand ist bevorzugt zur Verstärkung der Gehäusewand vorgesehen. Weiterhin bevorzugt ist sie zur Verstärkung der genutzten und/oder zur Abdeckung der ungenutzten Anlenkpunkte und/oder Aussparungen vorgesehen. Dafür ist es zudem bevorzugt, dass sie die genutzten Anlenkpunkte und/oder Aussparungen aufweist.

Die Anlenkpunkte sind bevorzugt als Durchgangsbohrungen ausgebildet. Vorzugsweise werden sie zum Befestigen von Anlenkmitteln, insbesondere von Zapfen, genutzt. Dabei ist es bevorzugt, dass die Zapfen die mit der Verstärkungswand ausgestattete Gehäusewand durchsetzen.

Die Aussparungen werden bevorzugt als Kulissen genutzt. Dafür sind sie ebenfalls bevorzugt als Langlöcher ausgebildet. Dabei können die Langlöcher sowohl geradlinig als auch bogenförmig ausgebildet sein. In Abhängigkeit von einem gewünschten Verstellweg können die als Kulissen genutzten Aussparungen aber auch anders geformt sein.

In einer bevorzugten Ausführungsform ist an der Gehäusewand ein Deckel zum Verschließen der ersten Durchgangsöffnung anordbar. Der Deckel ist bevorzugt lösbar an der Gehäusewand befestigbar oder befestigt, insbesondere mittels Schrauben. Besonders bevorzugt ist der Deckel zweiteilig ausgebildet. In dieser Ausführungsform weist er bevorzugt einen oberen Deckelteil und einen unteren Deckelteil auf. Die beiden Deckelteile sind vorzugsweise unabhängig voneinander lösbar vorgesehen.

Ganz besonders bevorzugt ist in dem Deckel eine Ausnehmung angeordnet, die zum Lagern des ersten Förderungs- und/oder Verarbeitungsaggregates vorgesehen ist. Die Ausnehmung ist vorzugsweise in dem oberen Deckelteil angeordnet.

Weiterhin ist es bevorzugt, dass in der Gehäusewand weitere Ausnehmungen zum Lagern weiterer, insbesondere dem ersten Förderungs- und/oder Verarbeitungsaggregat vorgeordneter oder nachgeordneter, Förderungs- und/oder Verarbeitungsaggregate des Mähdreschers vorgesehen sind.

Die Gehäusewand kann auch weitere Elemente, insbesondere Aussparungen, Anlenkpunkte, Befestigungsmittel, Positionierungsmittel, Durchgangsbohrungen oder ähnlich mit gleichem oder verschiedenem Durchmesser und/oder mit gleicher oder verschiedener Form aufweisen. Zudem können die Bohrungen Befestigungs- und/oder Positionierungsmittel zumindest teilweise mit Gewinden versehen sein. Die weiteren Elemente sind beispielsweise zum Anordnen weiterer Verstellmechaniken, anderer Strukturelemente und/oder für weitere Funktionen nutzbar.

In einer bevorzugten Ausführungsform, die die Aufgabe ebenfalls löst, weist die Gehäusewand an einer Frontseite eine Säule auf, die zur Aufnahme von Kräften, die insbesondere durch die in der Gehäusewand gelagerten Förderungs- und/oder Verarbeitungsaggregate verursacht sind, vorgesehen ist. Diese Ausführungsform der Gehäusewand zeichnet sich dadurch aus, dass die Säule eine einstückig gefertigte Innenwand mit zwei voneinander beabstandeten Auslegern zur Anbindung eines Einzugkanals des Mähdreschers aufweist.

Durch die einstückige Fertigung der Innenwand mit den Auslegern ist die für die Säule erforderliche Bauteilezahl reduzierbar. Zudem kann die Säule typ- und/oder ausstattungsunabhängig gefertigt werden.

Bevorzugt weist die Säule weiterhin einen einstückig gefertigten, abgekanteten Träger auf. Der Träger ist bevorzugt im Querschnitt etwa L- förmig ausgebildet. Vorzugsweise weist er eine Frontwand und eine zu dieser im Wesentlichen quer angeordnete Außenwand auf. Dadurch kann nicht nur die Bauteilezahl weiter verringert werden. Sondern vorzugsweise ist der Träger aus einem Flachbandmaterial einer Stärke von mehr als 8mm, insbesondere mehr als 12mm, hergestellt. Dadurch ist keine weitere aufbauende Verstärkung der Säule erforderlich, so dass Bauraum eingespart wird.

Die Säule weist weiterhin bevorzugt eine Unterwand, eine Rückwand und/oder Verstärkungsbleche auf, die kraftflussoptimiert ausgebildet und/oder angeordnet sind. Die Säule nimmt dadurch die insbesondere im Betrieb des Mähdreschers auf das Gehäuse wirkenden Kräfte optimal auf. Auch dadurch können Bauraum und Gewicht der Säule und/oder des Gehäuses eingespart werden.

Erfindungsgemäß wird die Aufgabe mit einem selbstfahrenden Mähdrescher mit einem Gehäuse mit einer solchen Gehäusewand gelöst. Die Gehäusewand begrenzt das Gehäuse zumindest teilweise. Bevorzugt bildet die Gehäusewand eine erste Seitenwand des Gehäuses. In einer bevorzugten Ausführungsform ist das Gehäuse ein Trommelhaus für ein Dreschwerk des selbstfahrenden Mähdreschers.

In einer bevorzugten Ausführungsform weist das Gehäuse eine der Gehäusewand gegenüber liegende zweite Seitenwand auf, wobei an einer Frontseite der zweiten Seitenwand ebenfalls eine Säule zur Aufnahme von Kräften, die insbesondere durch die in der Gehäusewand gelagerten Förderungs- und/oder Verarbeitungsaggregate verursacht sind, vorgesehen ist. Die Säulen bewirken eine Versteifung des Gehäuses.

Es ist bevorzugt, dass auch die Säule der zweiten Seitenwand eine einstückig gefertigte Innenwand mit zwei voneinander beabstandeten Auslegern zur Anbindung des Einzugkanals des Mähdreschers aufweist. Durch die einstückige Fertigung der Innenwand mit den Auslegern ist auch die für die Säule der zweiten Seitenwand erforderliche Bauteilezahl reduziert. Zudem kann auch die Säule der zweiten Seitenwand typ- und/oder ausstattungsunabhängig gefertigt werden.

Bevorzugt weist auch die Säule der zweiten Seitenwand den einstückig gefertigten, abgekanteten Träger auf. Der Träger ist dadurch im Querschnitt ebenfalls etwa L- förmig ausgebildet. Vorzugsweise weist er ebenfalls die Frontwand und die zu dieser im Wesentlichen quer angeordnete Außenwand auf. Dabei ist es weiterhin bevorzugt, dass auch dieser Träger aus einem Flachbandmaterial einer Stärke von mehr als 8mm, insbesondere mehr als 12mm, hergestellt ist. Zudem weist die Säule der zweiten Seitenwand ebenfalls bevorzugt die Unterwand, die Rückwand und/oder Verstärkungsbleche auf, die kraftflussoptimiert angeordnet sind. Dadurch können nicht nur die Baubreite des Gehäuses insgesamt verringert sondern zudem Gewicht des Gehäuses eingespart werden.

Vorzugsweise ist die Säule der zweiten Seitenwand etwa spiegelsymmetrisch zur Säule der Gehäusewand angeordnet. Sie kann sich aber in Bezug auf die Breite und Stärke ihrer Wände, insbesondere der Innenwand und des Trägers, sowie bezüglich weiterer, die mit ihr aufnehmbaren Kräfte bestimmenden Eigenschaften von der Säule der Gehäusewand unterscheiden. Durch den analogen Aufbau der beiden Säulen ist zumindest der Herstellungsprozess im Wesentlichen gleich. Zudem ist es bevorzugt, dass möglichst viele Bestandteile der beiden Säulen baugleich ausgebildet sind.

Die Aufgabe wird weiterhin gelöst mit einer Säule für eine solche Gehäusewand oder für ein solches Gehäuse mit der einstückig gefertigten Innenwand mit den zwei voneinander beabstandeten Auslegern zur Anbindung des Einzugkanals des Mähdreschers und dem einstückig gefertigten, abgekanteten Träger. Dabei ist es bevorzugt, dass die Innenwand und die Außenwand zumindest entlang einer Verbindungslinie formschlüssig miteinander verbunden sind, insbesondere miteinander verschweißt.

Erfindungsgemäß wird die Aufgabe gelöst mit einem selbstfahrenden Mähdrescher mit einem solchen Gehäuse. Der selbstfahrende Mähdrescher weist das erste Förderungs- und/oder Verarbeitungsaggregat sowie das Bodensegment auf. Dabei ist der Mähdrescher in einer ersten Ausführungsform vom Typ einer Schüttlermaschine. Dabei sind das Förderungs- und/oder Verarbeitungsaggregat eine Abscheidetrommel und das Bodensegment ein Korbbodensegment, insbesondere ein Abscheidekorb.

Die beiden ersten Anlenkpunkte werden dann vorzugsweise zum Befestigen von Komponenten der Verstellmechanik, insbesondere des ersten Verstellteils der Verstellmechanik, genutzt. Die Komponenten sind dann vorzugsweise ortsfest an den ersten Anlenkpunkten gelagert. In dieser Ausführungsform ist der erste Verstellteil der Verstellmechanik bevorzugt eine Abscheidekorbverstellung.

Oder der Mähdrescher ist in einer zweiten Ausführungsform vom Typ einer Axialrotormaschine. Besonders bevorzugt ist die Axialrotormaschine eine Hybridmaschine. Dabei ist das Förderungs- und/oder Verarbeitungsaggregat eine Zuführtrommel und das Bodensegment ein Einlaufbodensegment ist. Bei der Ausführungsform als Hybridmaschine ist die Zuführtrommel bevorzugt einer Dreschtrommel nachgeordnet.

Bei dieser zweiten bevorzugten Ausführungsform wird einer der beiden Anlenkpunkte bevorzugt zum Anordnen des zweiten, dem ersten nachgeordneten Förderungs- und/oder Verarbeitungsaggregat des Mähdreschers genutzt. Das dem ersten nachgeordnete Förderungs- und/oder Verarbeitungsaggregat des Mähdreschers dieser Ausführungsform ist bevorzugt ein Axialrotor. Vorzugsweise wird ein Einlaufkopf des Axialrotors an dem Anlenkpunkt befestigt.

Zudem kann der zweite Anlenkpunkt zum Anordnen der Verstellmechanik, insbesondere des ersten Verstellteils der Verstellmechanik, genutzt werden. Dadurch kann das Einlaufbodensegment, oder ein oder mehrere Teile des Einlaufbodensegmentes verstellbar vorgesehen werden. In Abhängigkeit von der Verstellbarkeit des Einlaufbodensegmentes oder des oder der Teile des Einlaufbodensegmentes kann die Gehäusewand dafür weitere Anlenkpunkte und/oder Aussparungen aufweisen.

Trotz der typ- und/oder ausstattungsabhängigen Anwendungsvielfalt kann für alle diese Ausführungsformen dieselbe Gehäusewand genutzt werden.

In einer besonders bevorzugten Ausführungsform ist oder sind das erste Bodensegment oder Teile des ersten Bodensegmentes dem Gehäuse, insbesondere durch die erste Durchgangsöffnung, entnehmbar. Dadurch ist das erste Bodensegment oder sind Teile davon bei Verschleiß, erntegutabhängig oder in Abhängigkeit von den Erntebedingungen ersetzbar oder durch ein erstes Bodensegment oder Teile davon mit anderen, zum Erntegut und/oder den Erntebedingungen passenderen Eigenschaften austauschbar.

Die Erfindung wird im Folgenden anhand von Figuren erläutert. Die Figuren sind lediglich beispielhaft und schränken den allgemeinen Erfindungsgedanken nicht ein. Es zeigen:
- Fig. 1: einen selbstfahrenden Mähdrescher vom Typ einer Schüttlermaschine nach dem Stand der Technik;
- Fig. 2: in (a) eine erste Ausführungsform eines Dreschwerks mit einem diesem nachgeordneten Förderungs- und/oder Verarbeitungsaggregat für einen erfindungsgemäßen Mähdrescher, in (b) eine zweite Ausführungsform eines Dreschwerks mit einem diesem nachgeordneten Förderungs- und/oder Verarbeitungsaggregat für einen erfindungsgemäßen Mähdrescher, und in (c) ein Gehäuse für das Dreschwerk der Fig. 2 (b);
- Fig. 3: in (a) das Gehäuse der Fig. 2 (c) in einer perspektivischen Ansicht, und in (b) und (c) jeweils einen Ausschnitt aus dem Gehäuse;
- Fig. 4: in (a) das Gehäuse der Fig. 2 (c) in einer Ausstattungsvariante für das Dreschwerk der Fig. 2 (a), und in (b) einen Ausschnitt aus dem Gehäuse; und
- Fig. 5: in (a) eine Säule für das Gehäuse der Fig. 2 - 4, und in (b) einen Ausschnitt aus der Säule der Fig. 5 (a).

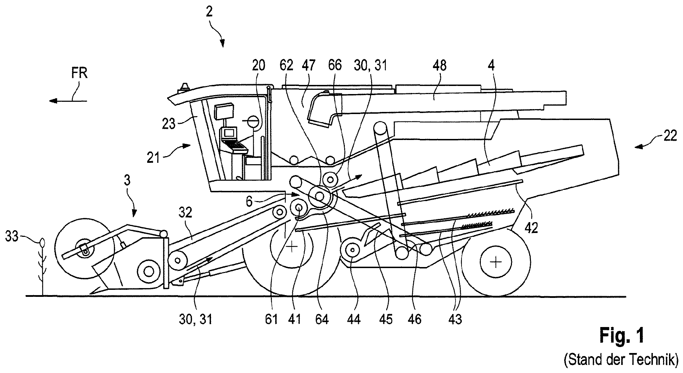

Figur 1 zeigt einen selbstfahrenden Mähdrescher 2 vom Typ einer Schüttlermaschine nach dem Stand der Technik. Eine Fahrtrichtung des Mähdreschers 2 ist durch einen Pfeil FR gezeigt.

Der Mähdrescher 2 weist eine Frontseite 21 auf, an der eine Fahrerkabine 23 für einen Bediener 20 angeordnet ist. An der Frontseite 21 ist zudem ein Schneidwerk 3 angeordnet, welches Erntegut 33 aufnimmt. Das Schneidwerk 3 leitet das Erntegut 33 in einen unterhalb der Fahrerkabine 23 angeordneten Einzugkanal 32, über den das Erntegut 33 als Erntegutstrom 30 in eine Förderrichtung 31 an die Förderungs- und/oder Verarbeitungsaggregate 61, 62, 66, 4, 41 - 48 des Mähdreschers 2 geleitet wird.

Dabei wird das Erntegut 33 zunächst in ein Dreschwerk 6 gefördert. Das hier dargestellte herkömmliche Dreschwerk 6 weist als Förderungs- und/oder Verarbeitungsaggregate 61, 62, 66 drei Trommeln 61, 62, 66 auf, nämlich eine Beschleunigungstrommel 61, die einer Dreschtrommel 62 vorgeordnet ist, die Dreschtrommel 62 sowie eine der Dreschtrommel 62 nachgeordnete Wendetrommel 66. Die Beschleunigungstrommel 61 ist zum Beschleunigen und zum Vordreschen des Erntegutes 33 sowie zum Zuführen des Erntegutes 33 zur Dreschtrommel 62 vorgesehen. Die Dreschtrommel 62 drischt das Erntegut 33. Die Wendetrommel 66 übergibt es einem nachgeordneten Förderungs- und/oder Verarbeitungsaggregat, nämlich einer Nachbearbeitungseinrichtung 4. Die Nachbearbeitungseinrichtung 4 ist hier als Hordenschüttler ausgebildet. Sie ist zum Reinigen des Erntegutes 33 vorgesehen.

Unterhalb des Dreschwerks 6 ist ein Dreschkorb 64, der im Folgenden auch als zweites Bodensegment bezeichnet ist, angeordnet. Durch den Dreschkorb 64 wird bereits gelöstes Korn aus dem Erntegutstrom 30 abgeschieden.

Die im Dreschwerk 6 und dem Hordenschüttler 4 abgeschiedenen Körner werden weiteren nachgeordneten Förderungs- und/oder Verarbeitungsaggregaten 41 - 48 zugeführt. Dabei werden sie über einen Rücklaufboden 42 und einen Vorbereitungsboden 41 einer mehrere Reinigungssiebe 43 und ein Gebläse 44 umfassenden Reinigungseinrichtung (nicht bezeichnet) zugeführt. Die gereinigten Körner werden anschließend über einen Kornelevator 46 in einen Korntank 47 geleitet. Größere Bestandteile des Gutstromes 30, die nicht durch die Reinigungssiebe 43 fallen können, werden dem Dreschwerk 1 über einen Überkehrelevator 45 erneut zugeführt. Stroh und Spreu (nicht bezeichnet) werden an einer Heckseite 22 des Mähdreschers 2 auf dem Boden (nicht bezeichnet) abgelegt oder verteilt.

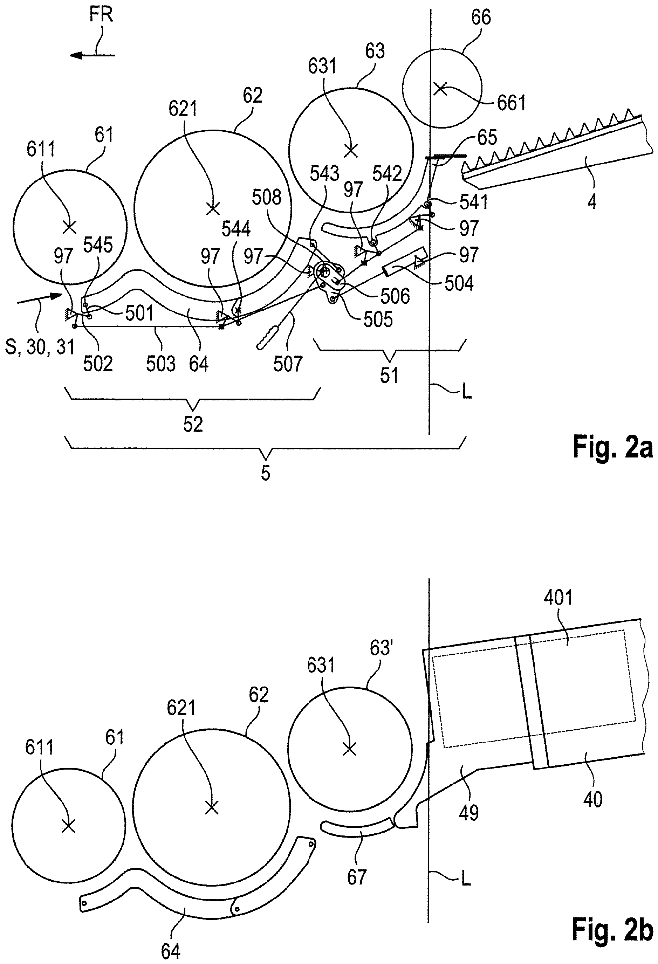

Die Erfindung umfasst neben einer solchen Schüttlermaschine auch Mähdrescher 2 vom Typ einer Axialrotormaschine, die als Förderungs- und/oder Verarbeitungsaggregat einen Axialrotor 401 (s. Fig. 2 (b) anstelle eines Hordenschüttlers 4 aufweisen.

Fig. 2 (a) zeigt eine Anordnung aus dem Dreschwerk 6 eines erfindungsgemäßen Mähdreschers 2 vom Typ einer Schüttlermaschine und einen Ausschnitt des Hordenschüttlers 4 in einer Seitenansicht schematisch. Das Dreschwerk 6 umfasst vier Trommeln 61, 62, 63, 66 und zwei Korbböden 64, 65. Dem Dreschwerk 6 ist der Hordenschüttler 4 nachgeordnet.

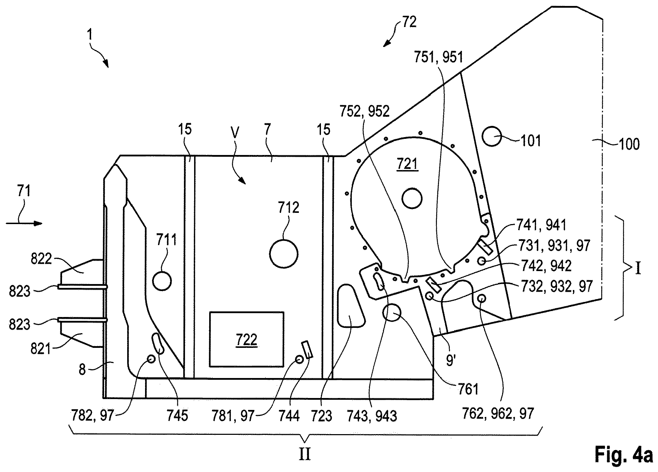

Bei diesem Dreschwerk 6 ist zwischen der Wendetrommel 66 und der Dreschtrommel 62 zusätzlich eine Abscheidetrommel 63 vorgesehen. Die Abscheidetrommel 63 wird im Rahmen der Beschreibung eines als Schüttlermaschine ausgebildeten Mähdreschers 2 im Folgenden auch als erstes Förderungs- und/oder Verarbeitungsaggregat 63 bezeichnet. Unterhalb der Abscheidetrommel 63 ist ein erstes Bodensegment 65 angeordnet. Es handelt sich bei der Schüttlermaschine um einen Abscheidekorb 65. Im Rahmen der Beschreibung eines als Schüttlermaschine ausgebildeten Mähdreschers 2 werden daher die Begriffe Abscheidekorb 65 und erstes Bodensegment 65 synonym verwendet. Einen Ausschnitt aus einem Mähdrescher 2 vom Typ der Schüttlermaschine zeigen auch die Fig. 4 (a) - (b) schematisch.

Unterhalb der Beschleunigungstrommel 61 und der Dreschtrommel 62 ist das zweite Bodensegment 64, nämlich der Dreschkorb 64, angeordnet.

Bei der Bearbeitung des Erntegutes 33 wird dieses als Erntegutstrom 30 durch einen Spalt S zwischen den Trommeln 61 - 63, 66 und den beiden Korbböden 64, 65 in einer Förderrichtung 31 gefördert und dabei ausgedroschen. Die Trommeln 61 - 63, 66 drehen sich dabei jeweils in eine Drehrichtung (nicht bezeichnet) um ihre Drehachsen 611, 621, 631, 661. Die Wendetrommel 66 führt den gedroschenen Erntegutstrom 30 dem Hordenschüttler 4 zu.

Um den Ausdrusch erntegutabhängig und/oder in Abhängigkeit von den Erntebedingungen zu beeinflussen, können die beiden Bodensegmente 64, 65 verstellt werden. Dafür ist eine Verstellmechanik 5 vorgesehen. Die Verstellmechanik 5 weist einen ersten Verstellteil 51 zum Verstellen des ersten Bodensegments 65, hier des Abscheidekorbes 65 auf. Zudem weist sie einen zweiten Verstellteil 52 zum Verstellen des zweiten Bodensegments 64, hier des Dreschkorbes 64, auf. Um auch bei schnellem Erntegutstrom 30 und starkem Dreschen noch eine gute Strohqualität gewährleisten zu können, ist ein Abstand (nicht bezeichnet) der Abscheidetrommel 63 von dem Abscheidekorb 65 voreinstellbar. Dies ist mit dem ersten Verstellteil 51 der Verstellmechanik 5 möglich. Zudem sind der Dreschkorb 64 und der Abscheidekorb 65 gemeinsam verstellbar. Dafür werden sowohl der erste Verstellteil 51 als auch der zweite Verstellteil 52 betätigt.

Die Verstellmechanik 5, also sowohl der erste als auch der zweite Verstellteil 51, 52, weisen dafür eine Vielzahl Komponenten 501 - 507 auf: An den Korbböden 64, 65 sind dafür Laschen 501 voneinander beabstandet befestigt, die jeweils mit einem ortsfest drehgelagerten Winkelhebel 502 verbunden sind. Die Winkelhebel 502 sind mittels Verbindungsstreben 503 miteinander verbunden. Ein Verbindungswinkelhebel 505 ist mittels eines ersten Verstellhebels 504, der hier beispielhaft als Hydraulikzylinder ausgebildet ist, verstellbar. Am Verbindungswinkelhebel 505 sind eine Verbindungsstrebe 503 und eine Lasche 501 des zweiten Verstellteils 52 befestigt. Zudem ist am Verbindungswinkelhebel 505 ein Verbindungsbauteil 506 exzentrisch um eine Welle 508 drehbar gelagert. Das Verbindungsbauteil 506 ist mit einer Verbindungsstrebe 503 des ersten Verstellteils 51 verbunden. Die Welle 508 ist durch Betätigen eines zweiten Verstellhebels 507, der hier beispielhaft als manuell betätigbarer Hebel dargestellt ist, drehbar. Dabei wird das Verbindungsbauteil 506 verstellt.

Ein Voreinstellen des ersten Bodensegments 65 ist daher durch Betätigen des zweiten Verstellhebels 507 möglich. Durch Betätigen des ersten Verstellhebels 504 werden beide Korbböden 64, 65 verstellt.

Die Verstellmechanik 5 kann eine Überlastsicherung (nicht gezeigt) umfassen, die bewirkt, dass der Dreschkorb 64 und/oder der Abscheidekorb 65 bei einer Überlast durch das Erntegut 3 kurzzeitig ausweichen. Dafür kann die Verstellmechanik 5 eine Feder oder einen Hydraulikspeicher (nicht gezeigt) aufweisen, der bei Überlast nachgibt, so dass der Dreschkorb 64 und/oder der Abscheidekorb 65 sich öffnen. Bei einer Verstellmechanik 5, die ein gemeinsames Verstellen des Dreschkorbs 64 und des Abscheidekorbs 65 vorsieht, wird der Abscheidekorb 65 bei einem durch die Überlastsicherung bewirkten Ausweichen des Dreschkorbs 64 automatisch mit verstellt. Sofern hingegen der erste und der zweite Verstellteil 51, 52 der Verstellmechanik 5 unabhängig voneinander verstellbar sind, weisen vorzugsweise sowohl der Dreschkorb 64 als auch der Abscheidekorb 65 jeweils eine eigene solche Überlastsicherung auf.

Fig. 2 (b) zeigt ebenfalls eine Ausführungsform eines Dreschwerks für einen erfindungsgemäßen Mähdrescher 2. Im Gegensatz zur Fig. 2 (a) ist dieser aber als Axialrotormaschine, nämlich als Hybridmaschine, ausgebildet. Im Folgenden werden die Begriffe Axialrotormaschine und Hybridmaschine daher synonym verwendet. In dieser Ausführungsform ist das erste Förderungs- und/oder Verarbeitungsaggregat eine Zuführtrommel 63' und das erste Bodensegment 67 ein Einlaufbodensegment 67. Im Rahmen der Beschreibung eines als Axialrotormaschine ausgebildeten Mähdreschers 2 werden daher die Begriffe Einlaufbodensegment 67 und erstes Bodensegment 67 synonym verwendet. Weiterhin werden im Rahmen der Beschreibung eines als Axialrotormaschine ausgebildeten Mähdreschers 2 die Begriffe Zuführtrommel 63' und erstes Förderungs- und/oder Verarbeitungsaggregat 63' synonym verwendet.

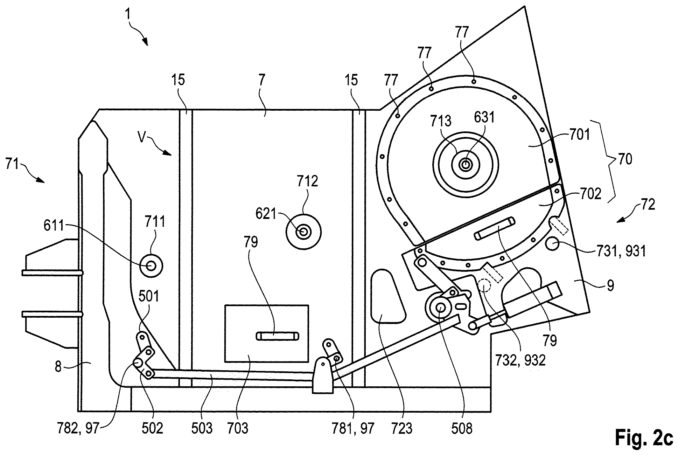

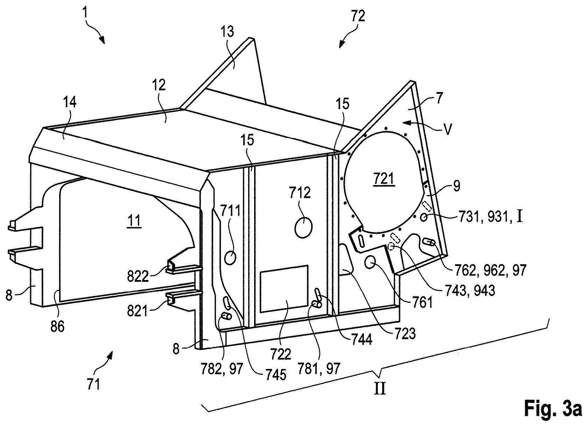

Die Zuführtrommel 63' führt den Erntegutstrom 30 einem Einlaufkopf 49 eines Axialrotorgehäuses 40 zu, in dem ein Axialrotor 401 angeordnet ist. Der Axialrotor 401 ist daher ein der Zuführtrommel 63' nachgeordnetes, zweites Förderungs- und/oder Verarbeitungsaggregat 401. Im Übrigen ist das Dreschwerk 6 des als Axialrotormaschine ausgebildeten Mähdreschers 2 analog dem des als Schüttlermaschine ausgebildeten Mähdreschers 2 aufgebaut. Es weist daher ebenfalls die Beschleunigungstrommel 61, die Dreschtrommel 62 sowie den Dreschkorb 64 als zweites Bodensegment auf. Zudem weist es eine Verstellmechanik 5 auf, die zumindest den zweiten Verstellteil 52 zum Verstellen des Dreschkorbs 64 umfasst (s. Fig. 2 (c)). Den Mähdrescher 2 vom Typ der Axialrotormaschine zeigen auch die Fig. 2 (c) und 3 (a) -(c).

Fig. 2 (c) zeigt ein Gehäuse 1 für den Mähdrescher 2 in einer Seitenansicht. Es handelt sich um ein Trommelhaus zur Aufnahme des Dreschwerks 6 des Mähdreschers 2. Im Folgenden werden daher die Begriffe Trommelhaus 1 und Gehäuse 1 synonym verwendet. Sichtbar ist eine erfindungsgemäße Gehäusewand 7 des Gehäuses 1. Die in den Figuren 2 (a) und (b) dargestellte Linie L zeigt schematisch ein heckseitiges Ende der Gehäusewand 7 beziehungsweise des Gehäuses 1.

Die Ausstattung der Gehäusewand 7 ist hier für den als Axialrotormaschine ausgebildeten Mähdrescher 2 gewählt.

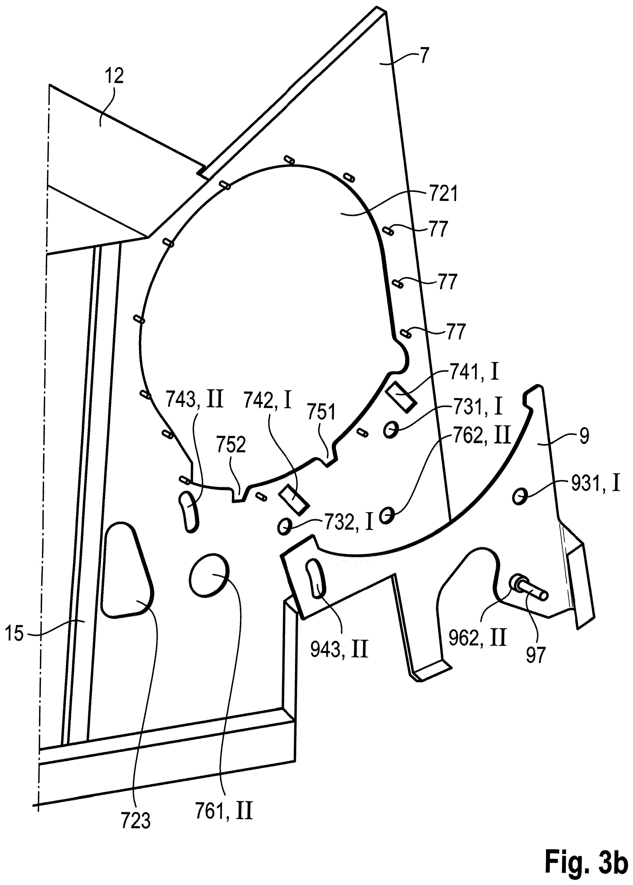

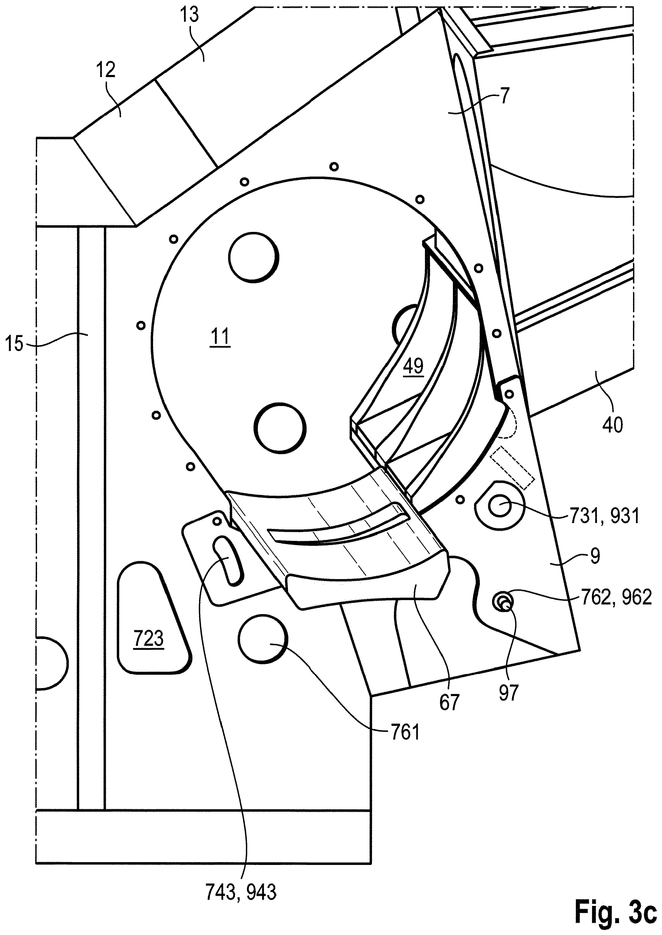

Die Gehäusewand 7 weist eine erste Durchgangsöffnung 721 (s. Fig. 3) auf. Die erste Durchgangsöffnung 721 ist hier durch einen zweiteilig ausgebildeten Deckel 70 verschlossen. Der Deckel 70 weist einen oberen Deckelteil 701 und einen unteren Deckelteil 702 auf. Die Deckelteile 701, 702 sind mittels Befestigungsmitteln 77, insbesondere Schrauben oder Bolzen, an der Gehäusewand 7 befestigt. Sie sind unabhängig voneinander von der Gehäusewand 7 lösbar.

Im oberen Deckelteil 701 ist eine Ausnehmung 713 vorgesehen, die zum Lagern eines ersten Förderungs- und/oder Verarbeitungsaggregates 63' des Mähdreschers 2, hier der Zuführtrommel 63', dient. Nach dem Lösen beider Deckelteile 701, 702 ist das im Innenraum 11 (s. Fig. 3 (a)) des Gehäuses 1 angeordnete erste Förderungs- und/oder Verarbeitungsaggregat 63', insbesondere gemeinsam mit dem oberen Deckelteil 701, durch die Durchgangsöffnung 721 entnehmbar. Am unteren Deckelteil 702 ist als Handhabung ein Griff 79 angeordnet.

Sichtbar sind zwei weitere Ausnehmungen 711, 712 in der Gehäusewand 7, die zum Lagern der beiden dem ersten Förderungs- und/oder Verarbeitungsaggregat 63' vorgeordneten Förderungs- und/oder Verarbeitungsaggregate 61, 62, nämlich der Beschleunigungstrommel 61 und der Dreschtrommel 62, vorgesehen sind. Schematisch sind hier auch die Achsen 611, 621, 631 der Förderungs- und/oder Verarbeitungsaggregate 61, 62, 63' dargestellt.

Die Gehäusewand 7 weist zudem zwei weitere Durchgangsöffnungen 722, 723 auf. Eine zweite Durchgangsöffnung 722 (s. Fig. 3 (a)) ist ebenfalls mit einem Deckel 703 verschlossen. Eine dritte Durchgangsöffnung 723 ist hier unverschlossen dargestellt, aber bevorzugt ebenfalls mit einem Deckel (nicht dargestellt) verschließbar.

Durch die zweite Durchgangsöffnung 722 ist bei entferntem Deckel 703 das zweite Bodensegment 64 oder sind Teile davon entnehmbar, insbesondere austauschbar. Die dritte Durchgangsöffnung 723 dient vor allem als Sichtfenster.

An der Gehäusewand 7 ist der zweite Verstellteil 52 der Verstellmechanik 5 (s. Fig. 2 (a)) angeordnet. Mit diesem Verstellteil 52 ist das zweite Bodensegment 64, hier also der Dreschkorb 64, verstellbar. Ein erster Verstellteil 51 zum Verstellen des ersten Bodensegmentes 67 oder Teilen des ersten Bodensegmentes 67, hier des Einlaufbodensegmentes 67, ist bei dieser Ausführungsform nicht vorgesehen.

Sichtbar sind hier daher die Laschen 501, Winkelhebel 502 und Verbindungsstreben 503 sowie der erste Verstellhebel 504 und der Verbindungswinkelhebel 505 des zweiten Verstellteils 52. Der zweite Verstellhebel 507 und das Verbindungsbauteil 506 sowie die Laschen 501, Winkelhebel 502 und Verbindungsstreben 503 des ersten Verstellteils 51 sind daher nicht dargestellt.

Zum Anordnen eines zweiten, dem ersten nachgeordneten Förderungs- und/oder Verarbeitungsaggregates 401 des Mähdreschers 2 weist die Gehäusewand ein erstes Positioniermodul I auf, das zwei erste Anlenkpunkte 731, 732 umfasst. Die ersten Anlenkpunkte 731, 732 sind als Durchgangsbohrungen ausgebildet. Von den beiden ersten Anlenkpunkten 731, 732 des ersten Positioniermoduls I wird hier nur ein erster Anlenkpunkt 731 genutzt. Der bei dieser Ausführungsform genutzte erste Anlenkpunkt 731 ist derjenige, der einer Heckseite 72 der Gehäusewand 7 näher als der andere angeordnet ist. Dieser wird zum Befestigen des Einlaufkopfes 49 des Axialrotorgehäuses 40 (s. Fig. 3 (c)) verwendet.

Das erste Positioniermodul I der Gehäusewand 7 weist zudem zumindest zwei erste Aussparungen 741, 742 (s. Fig. 4 (a)) auf, die zum Anordnen der Verstellmechanik 5, insbesondere des ersten Verstellteils 51 der Verstellmechanik 5, vorgesehen sind. Die ersten Aussparungen 741 - 742 sind als Langlöcher 741 - 742 ausgebildet. Bei der hier dargestellten Ausführungsform des Mähdreschers 2 werden diese aber nicht genutzt.

Zudem weist die Gehäusewand 7 ein zweites Positioniermodul II (s. Fig. 4 (a)) mit zweiten Anlenkpunkten 761, 762, 781, 782 und zweiten Aussparungen 743 - 745 zum Anordnen der Verstellmechanik 5 auf, die für den zweiten Verstellteil 52 der Verstellmechanik 5 verwendet werden. Auch die zweiten Anlenkpunkte 761, 762, 781, 782 sind als Durchgangsbohrungen und die zweiten Aussparungen 743 - 745 als Langlöcher 743 - 745 ausgebildet.

Die zweiten Aussparungen 743 - 745 sind zum Durchführen von Verbindungsmitteln vorgesehen, hier von Lagermitteln 543 - 545, an denen die Laschen 501 des zweiten Verstellteils 52 drehbar angelenkt sind. Die zweiten Anlenkpunkte 761, 762, 781, 782 sind zum Befestigen von Anlenkmitteln, hier von Zapfen 97 vorgesehen, an denen die Winkelhebel 502 und der Verbindungswinkelhebel 505 ortsfest drehgelagert sowie der erste Verstellhebel 504 befestigt sind.

Zur Verstärkung der genutzten und zur Abdeckung der ungenutzten Anlenkpunkte 731, 732 und Aussparungen 741 - 742 weist die Gehäusewand 7 ein Verstärkungsblech 9 auf, das zumindest im Bereich der ersten Anlenkpunkte 731, 732 vorgesehen ist. Das Verstärkungsblech 9 weist hier eine Größe und Form auf, durch die es sich über die ersten Anlenkpunkte 731, 732 und ersten Aussparungen 741 - 742 des ersten Positioniermoduls I erstreckt. Zudem erstreckt es sich bündig unterhalb der ersten Durchgangsöffnung 721. Dadurch erstreckt es sich auch über eine zweite Aussparung 743 des zweiten Positioniermoduls II. Weiterhin erstreckt es sich hier auch über einen zweiten Anlenkpunkt 762 des zweiten Positioniermoduls II.

Das Verstärkungsblech 9 weist nur den hier genutzten ersten Anlenkpunkt 931, den hier genutzten zweiten Anlenkpunkt 762 sowie die eine hier genutzte zweite Aussparung 943 auf. In dem Bereich, in dem es angeordnet ist, überdeckt es alle anderen Anlenkpunkte 732 und Aussparungen 741, 742. In Abhängigkeit vom Typ und/oder der Ausstattung des Mähdreschers 2 werden aber verschiedene Verstärkungsbleche 9, 9' verwendet, die daher verschiedene Anlenkpunkte 731, 732, 762 und/oder Aussparungen 741 - 743 aufweisen können.

Die Gehäusewand 7 erstreckt sich flächig. Sie weist eine Vorderseite V und eine Innenseite (nicht bezeichnet) auf. Zur Verbesserung ihrer Steifigkeit kann sie Abkantungen, Sicken und/oder Einprägungen (nicht gezeigt) aufweisen. Sie ist durch Streben 15 verstärkt.

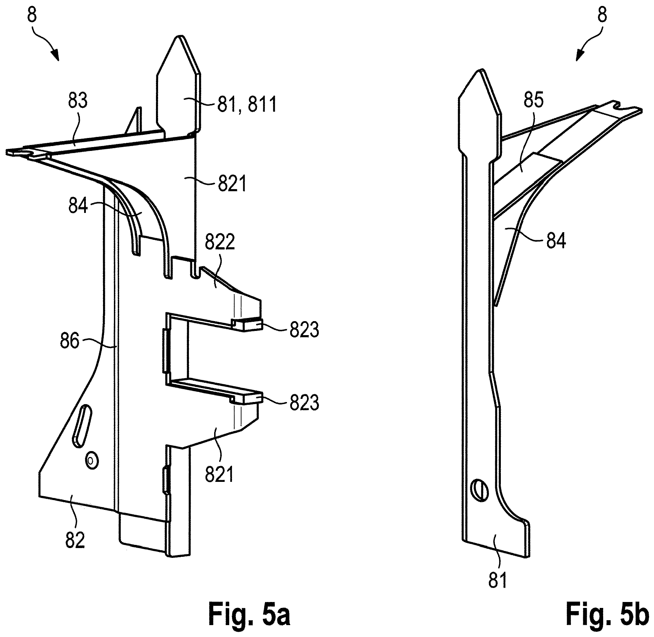

An einer Frontseite 71 weist die Gehäusewand 7 eine Säule 8 auf. Eine solche Säule 8 ist auch an einer der Gehäusewand 7 gegenüberliegenden Seitenwand 13 (s. Fig. 3 (a)) des Gehäuses 1 angeordnet. Die Säulen 8 sind zur Versteifung des Gehäuses 1 vorgesehen. Sie werden im Rahmen der Beschreibung der Fig. 5 näher erläutert.

Fig. 3 (a) zeigt das Gehäuse 1 der Fig. 2 (c) in einer perspektivischen Ansicht ohne die Verstellmechanik 5 und ihre Komponenten 501 - 508 sowie ohne die Deckel 70, 703.

Die Gehäusewand 7 bildet eine erste Seitenwand des Gehäuses 1. Das Gehäuse 1 weist eine der Gehäusewand 7 gegenüber liegende und von ihr beabstandete zweite Seitenwand 13 auf. Die Seitenwände 7, 13 sind durch eine Dachwand 12 miteinander verbunden. An der Frontseite 71 weisen die Seitenwände 7, 13 jeweils die Säule 8 zur Versteifung des Gehäuses 1 auf. Oberhalb der Säulen 8 ist zudem eine Vorderwand 14 zwischen diesen und der Dachwand 12 angeordnet.

Die Gehäusewand 7 weist die erste - dritte Durchgangsöffnung 721, 722, 723 sowie die Ausnehmungen 711, 712 zum Lagern der dem ersten Förderungs- und/oder Verarbeitungsaggregat 63' vorgeordneten Förderungs- und/oder Verarbeitungsaggregate 61, 62 auf.

Das Verstärkungsblech 9 der Gehäusewand 7 ist unterhalb der ersten Durchgangsöffnung 721 und bündig mit dieser angeordnet. Vom ersten Positioniermodul I weist es lediglich den der Heckseite 72 näher positionierten ersten Anlenkpunkt 931 auf. Da die Ausführungsform des Mähdreschers 2 der Fig. 2 (c) und 3 den zweiten Verstellteil 52 der Verstellmechanik 5 zum Verstellen des Dreschkorbs 64 nutzt, weist die Gehäusewand 7 zudem die zweiten Aussparungen 743 - 745 und die zweiten Anlenkpunkte 761, 762, 781, 782 auf.

Fig. 3 (b) zeigt einen Ausschnitt aus der Gehäusewand 7 des Gehäuses 1 der Fig. 3 (a). Die Verstärkungswand 9 ist explosionsartig dargestellt. Dadurch sind die in der Gehäusewand 7 vorgesehenen ersten Anlenkpunkte 731, 732 und ersten Aussparungen 741, 742 sichtbar. Zudem ist erkennbar, dass das Verstärkungsblech 9 den ungenutzten ersten Anlenkpunkt 732 sowie die ungenutzten ersten Aussparungen 741, 742 des ersten Positionierungsmoduls I abdeckt.

An einem zweiten Anlenkpunkt 962 des Verstärkungsblechs 9 ist weiterhin ein Bolzen 97 schematisch angeordnet dargestellt. In einem montierten Zustand durchsetzt dieser Bolzen 97 den zweiten Anlenkpunkt 762, 962 der mit dem Verstärkungsblech 9 versehenen Gehäusewand 7 vollständig.

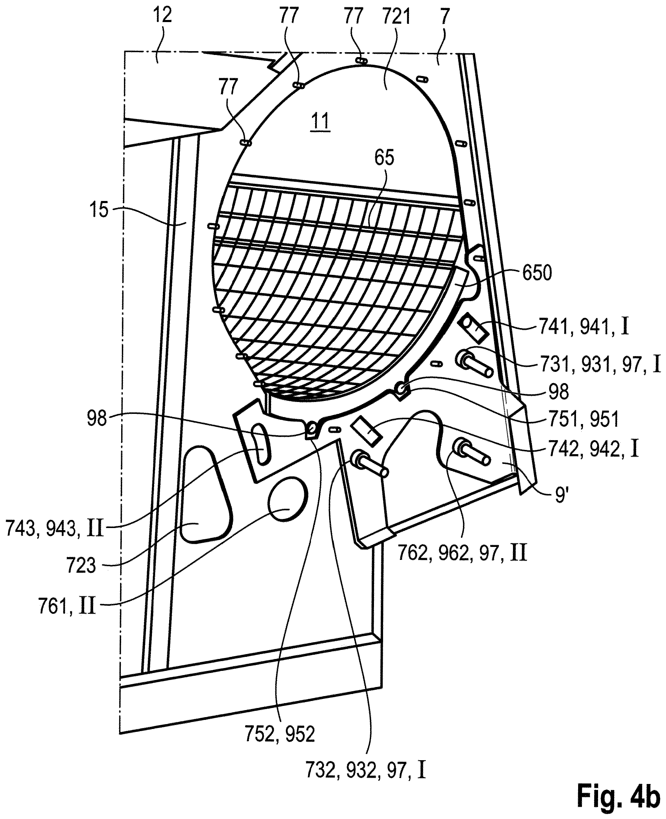

Das Verstärkungsblech 9 dieser Ausführungsform überdeckt zudem Einbuchtungen 751, 752, die an der ersten Durchgangsöffnung 721 vorgesehen sind. Diese werden für eine Ausführungsform des Mähdreschers 2 vom Typ der Schüttlermaschine benötigt (s. Fig. 4 (b)).

Fig. 3 (c) zeigt einen Ausschnitt aus dem Gehäuse 1 der Fig. 3 (a). Im Innenraum 11 des Gehäuses 1 ist das Einlaufbodensegment 67 angeordnet. Zudem ist an der Heckseite 72 des Gehäuses 1 das Axialrotorgehäuse 40 befestigt. Dafür ist der Einlaufkopf 49 des Axialrotorgehäuses 40 an dem genutzten ersten Anlenkpunkt 731 befestigt. Sichtbar ist, dass dieses Axialrotorgehäuse 40 zur Aufnahme von zwei Axialrotoren 401 ausgebildet ist. Solche Axialrotorgehäuse 40 können aber auch zur Aufnahme nur genau eines Axialrotors 401 oder von mehr als zwei Axialrotoren 401 ausgebildet sein. Die im Axialrotorgehäuse 40 angeordneten Axialrotoren 401 sind die der Zuführtrommel 63' als erste Förderungs- und/oder Bearbeitungsaggregate nachgeordneten zweiten Förderungs- und/oder Bearbeitungsaggregate.

Die erste Durchgangsöffnung 721 ist ausreichend groß ausgebildet, um das Einlaufbodensegment 67 durch die erste Durchgangsöffnung 721 aus dem Innenraum 11 entnehmen zu können. Das Einlaufbodensegment 67 ist daher austauschbar, insbesondere durch dasselbe Einlaufbodensegment 67, beispielsweise bei Verschleiß, oder durch verschiedene andere Einlaufbodensegmente (nicht gezeigt), beispielsweise erntegutabhängig oder in Abhängigkeit von den Erntebedingungen. Bei mit dem Deckel 70 versehener erster Durchgangsöffnung 721 muss dafür lediglich der untere Deckelteil 702 entfernt werden (s. Fig. 2 (c)). Das Einlaufbodensegment 67 ist dann aus dem Innenraum 11 herausziehbar. In der Darstellung der Fig. 3 (c) ist es teilweise aus dem Innenraum 11 herausgezogen. Es können aber auch nur Teile des Einlaufbodensegmentes 67 durch die erste Durchgangsöffnung 721 entnehmbar, insbesondere austauschbar, sein. Beispielsweise kann eine am Einlaufbodensegment 67 angeordnete Rampe 671 durch anderen Leitelemente (nicht gezeigt), beispielsweise V- förmige Leitelemente, oder durch Schneiden (nicht gezeigt) austauschbar sein.

Es ist ebenfalls eine Ausführungsform eines als Axialrotormaschine ausgebildeten Mähdreschers 2 bevorzugt, bei dem das Einlaufbodensegment 67 oder Teile des Einlaufbodensegmentes 67 verstellbar vorgesehen sind. Bei dieser Ausführungsform können die ungenutzten Anlenkpunkte 732 und/oder Aussparungen 741, 742 des ersten Positioniermoduls I für das Anordnen eines ersten Teils 51 der Verstellmechanik 5 oder einer anderen Verstellmechanik (nicht gezeigt) genutzt werden. Zudem können weitere Anlenkpunkte (nicht gezeigt) und/oder weitere Aussparungen (nicht gezeigt) für das erste und zweite Positioniermodul I, II oder für weitere Positioniermodule (nicht gezeigt) vorgesehen sein.

Die Fig. 4 (a) und (b) zeigen das Gehäuse 1 mit der erfindungsgemäßen Gehäusewand 7 für einen Mähdrescher 2 vom Typ der Schüttlermaschine.

An der Heckseite 72 ist ein sich an das Gehäuse 1 anschließendes Anschlussgehäuse 100 angeordnet. Das Anschlussgehäuse 100 ist zur Aufnahme der dem ersten Förderungs- und/oder Verarbeitungsaggregat 63, 63' nachgeordneten Förderungs- und/oder Verarbeitungsaggregate 66, 4, 401 vorgesehen. Im Falle einer Axialrotormaschine ist oder sind das vor allem der Axialrotor 401 oder die Axialrotoren 401. In dem hier dargestellten Fall der Schüttlermaschine ist das als nachgeordnetes zweites Förderungs- und/oder Verarbeitungsaggregat die Wendetrommel 66, und der Wendetrommel 66 nachgeordnet der Hordenschüttler 4. Daher weist das Anschlussgehäuse 100 eine Ausnehmung 101 zum Lagern der Wendetrommel 66 auf.

Die Gehäusewand 7 weist die erste - dritte Durchgangsöffnung 721 - 723, die erste und zweite Ausnehmung 711, 721 sowie das erste und zweite Positioniermodul I, II auf. Die Durchgangsöffnungen 721 - 723 sind hier offen dargestellt, aber durch die Deckel 70, 703 verschließbar.

Unterhalb der ersten Durchgangsöffnung 721 ist bündig mit dieser das Verstärkungsblech 9' angeordnet. Im Gegensatz zum Verstärkungsblech 9 der Fig. 2 (c) und 3 weist dieses Verstärkungsblech 9' die ersten Anlenkpunkte 931, 932 des ersten Positioniermoduls I, die ersten Aussparungen 941, 942 des ersten Positioniermoduls I, den einen zweiten Anlenkpunkt 962 sowie die eine zweite Aussparung 943 des zweiten Positioniermoduls II auf. Bei diesem Verstärkungsblech 9' werden daher alle Anlenkpunkte und Aussparungen, in dessen Bereich es angeordnet ist, genutzt. Die beiden ersten Anlenkpunkte 931, 932 sowie die ersten Aussparungen 941, 942 werden zum Befestigen von Komponenten 501 - 508 der Verstellmechanik 5, nämlich für Komponenten 501 - 508 des ersten Verstellteils 51, genutzt. Mit ihnen ist das erste Bodensegment 65, hier der Abscheidekorb 65 oder ein Teil des Abscheidekorbes 65, verstellbar.

Die vom Verstärkungsblech 9' verstärkte zweite Aussparung 743, 943 sowie der zweite Anlenkpunkt 762, 962 werden gemeinsam mit den weiteren zweiten Aussparungen 744, 745 und zweiten Anlenkpunkten 761, 781, 782 ebenfalls zum Befestigen von Komponenten 501 - 508 der Verstellmechanik 5, hier jedoch für Komponenten 501 - 508 des zweiten Verstellteils 52, genutzt. Mit ihnen ist das zweite Bodensegment 65, hier der Dreschkorb 64 oder ein Teil des Dreschkorbes 64, verstellbar.

Das Verstärkungsblech 9' weist zudem Einbuchtungen 951, 952 auf. Die Gehäusewand 7 weist analog angeordnete Einbuchtungen 751, 752 an der ersten Durchgangsöffnung 721 auf. Durch die Einbuchtungen 751, 752, 951, 952 sind bei eingebautem Abscheidekorb 65 Schrauben 98 zur Befestigung des Abscheidekorbes 65 zugänglich. Durch Lösen der Schrauben 98 kann ein Segmentteil 650 des Abscheidekorbes 65 durch die erste Durchgangsöffnung 721 entnommen werden. Dies ist in Fig. 4 (b), die einen vergrößerten Ausschnitt aus Fig. 4 (a) in perspektivischer Ansicht zeigt, dargestellt.

An der Frontseite 71 der Gehäusewand 7 ist zudem die Säule 8 angeordnet. Die Säule 8 ist zur Aufnahme von Kräften, die insbesondere durch die in der Gehäusewand 7 gelagerten Förderungs- und/oder Verarbeitungsaggregate 61 - 63, 63' verursacht sind, vorgesehen Die Säule 8 wird nun im Rahmen der Fig. 5 beschrieben.

Fig. 5 zeigt in (a) eine perspektivische Ansicht der an der Frontseite 71 der Gehäusewand 7 angeordneten Säule 8, und in (b) einen Ausschnitt aus der Säule 8. Das Gehäuse 1 weist an der der Gehäusewand 7 gegenüber liegenden zweiten Seitenwand 13 eine analog aufgebaute Säule 8 auf.

Die Säulen 8 sind vor allem zum Abstützen des oberhalb des Gehäuses 1 angeordneten Korntanks 47, aber auch zur Anbindung des Einzugskanals 32, über den das Erntegut 33 in den Mähdrescher 2 gefördert wird, vorgesehen. Dafür sind sie an einem Achskörper (nicht gezeigt) einer Vorderradachse (nicht gezeigt) des Mähdreschers 2 befestigt. Aufgrund der Anbindung des Einzugskanals 32 wirken an der Frontseite 71 der Säulen 8 und des Gehäuses 1 erhebliche Zugkräfte. Aufgrund der Belastung durch den Korntank 47 wirken erhebliche Kräfte von oben auf das Gehäuse 1. Zudem müssen die Säulen 8 erhebliche Vibrationsbelastungen, insbesondere während des Betriebs des Mähdreschers 2, abstützen.

Dennoch sind die Säulen 8 aus nur wenigen gestanzten, gelaserten und/oder gebogenen Blechen 81 - 85 gebaut. Um Gewicht zu sparen, werden Bleche verschiedener Stärke genutzt. Im Folgenden werden die Säulen 8 anhand des dargestellten Ausführungsbeispiels beschrieben.

Die Säule 8 umfasst eine einstückig gefertigte Innenwand 82 mit zwei voneinander beabstandeten Auslegern 821, 822. Die Ausleger 821, 822 sind zur Anbindung eines Einzugkanals 32 des Mähdreschers 2 vorgesehen. Durch die einstückige Fertigung der Innenwand 82 mit den Auslegern 821, 822 ist die für die Säule 8 erforderliche Bauteilezahl klein. An jedem der Ausleger 821, 822 ist zum Anbinden des Einzugkanals 32 ein Befestigungsblech 823 angeordnet.

Die Innenwand 82 weist zudem eine Versatzkante 86 auf. Durch die Versatzkante 86 ist die Innenwand 82 der Säule 8 bündig mit der Gehäusewand 7 montierbar.

Weiterhin weist die Säule einen einstückig gefertigten, abgekanteten Träger 81 auf. Der Träger 81 ist im Querschnitt etwa L- förmig ausgebildet. Er weist eine Frontwand 812 und eine zu dieser im Wesentlichen quer angeordnete Außenwand 811 auf. Die Außenwand 811 erstreckt sich im Wesentlichen parallel der Innenwand 82. Sie ist aber von der Innenwand 82 beabstandet. Dadurch erstreckt sich die Frontwand 812 ebenfalls etwa quer zur Innenwand 82. Die Frontwand 812 und die Innenwand 82 sich formschlüssig miteinander verbunden, insbesondere verschweißt.

Weiterhin weist die Säule 8 eine Unterwand 84, eine Rückwand 83 sowie Verstärkungsbleche 85 auf, die kraftflussoptimiert ausgebildet sind.

Insgesamt ist die Bauteilezahl der Säule 8 minimiert. Durch zwei solche frontseitig jeweils an den Seitenwänden 7, 13 des Gehäuses 1 angeordnete Säulen 8 können die Baubreite des Gehäuses 1 sowie sein Gewicht verringert werden.

Die erfindungsgemäße Gehäusewand 7 und das Gehäuse 1 können für verschiedene Typen und für verschiedene Modelle Mähdrescher 2 sowie für verschiedene Ausstattungen desselben Typs Mähdrescher 2 verwendet werden. Sie sind daher modular verwendbar. Die Varianz wird durch das Verstärkungsblech 9, 9' und gegebenenfalls das Einschweißen von Zapfen 97 für das Anordnen der Verstellteile 51, 52 der Verstellmechanik 5 dargestellt.

### Bezugszeichenliste

- 1: Gehäuse, Trommelhaus
- 11: Innenraum
- 12: Dachwand
- 13: Zweite Seitenwand
- 14: Vorderwand
- 15: Verstärkungsstrebe
- 100: Anschlussgehäuse
- 101: Lagermittel
- 2: Mähdrescher
- 20: Bediener
- 21: Frontseite
- 22: Heckseite
- 23: Fahrerkabine
- 24: Steuerung
- 25: Benutzerschnittstelle
- 3: Vorsatzgerät
- 30: Erntegutstrom
- 31: Förderrichtung
- 32: Einzugkanal
- 33: Erntegut
- 4: Förderungs- und/oder Verarbeitungsaggregat, Schüttler
- 40: Zweites Förderungs- und/oder Verarbeitungsaggregat
- 401: Axialrotor
- 41: Förderungs- und/oder Verarbeitungsaggregat, Zuführboden
- 42: Förderungs- und/oder Verarbeitungsaggregat, Rücklaufboden
- 43: Förderungs- und/oder Verarbeitungsaggregat, Reinigungssieb
- 44: Förderungs- und/oder Verarbeitungsaggregat, Gebläse
- 45: Förderungs- und/oder Verarbeitungsaggregat, Überkehrelevator
- 46: Förderungs- und/oder Verarbeitungsaggregat, Kornelevator
- 47: Förderungs- und/oder Verarbeitungsaggregat, Korntank
- 48: Förderungs- und/oder Verarbeitungsaggregat, Abtankrohr
- 49: Einlaufkopf des Axialrotors
- 5: Verstellmechanik
- 501: Komponente der Verstellmechanik, Lasche
- 502: Komponente der Verstellmechanik, Winkelhebel
- 503: Komponente der Verstellmechanik, Verbindungsstrebe
- 504: Komponente der Verstellmechanik, erster Verstellhebel
- 505: Komponente der Verstellmechanik, Verbindungswinkelhebel
- 506: Komponente der Verstellmechanik, Verbindungsbauteil
- 507: Komponente der Verstellmechanik, zweiter Verstellhebel
- 508: Komponente der Verstellmechanik, Welle
- 51: Erster Verstellteil, Einzugboden- oder Abscheidekorbverstellung
- 52: Zweiter Verstellteil, Dreschkorbverstellung
- 531, 532, 56, 57, 581, 582: Lager
- 541 - 545: Verbindungsmittel, Lagermittel
- 6: Dreschwerk
- 61: Förderungs- und/oder Verarbeitungsaggregat, Beschleunigungstrommel
- 611, 621, 631, 661: Trommelachse
- 62: Förderungs- und/oder Verarbeitungsaggregat, Dreschtrommel
- 63: Erstes Förderungs- und/oder Verarbeitungsaggregat, Abscheidetrommel
- 63': Erstes Förderungs- und/oder Verarbeitungsaggregat, Zuführtrommel
- 64: Zweites Bodensegment, Korbbodensegment, Dreschkorb
- 65: Erstes Bodensegment, Korbbodensegment, Abscheidekorb
- 650: Segmentteil
- 66: Zweites Förderungs- und/oder Verarbeitungsaggregat, Wendetrommel
- 67: Erstes Bodensegment, Einlaufbodensegment
- 671: Rampe
- 7: Gehäusewand, erste Seitenwand
- 70: Erster Deckel
- 701: Oberer Deckelteil
- 702: Unterer Deckelteil
- 703: Zweiter Deckel
- 71: Frontseite
- 711 - 713: Erste - dritte Ausnehmung für ein Lager
- 72: Heckseite
- 721 - 723: Erste - dritte Durchgangsöffnung
- 731, 732: Erster Anlenkpunkt, Durchgangsbohrung
- 741 - 742: Erste Aussparung, Langloch
- 743 - 745: Zweite Aussparung, Langloch
- 751 - 752: Einbuchtung
- 761, 762: Zweiter Anlenkpunkt, Durchgangsbohrung
- 77: Befestigungsmittel
- 781 - 782: Zweiter Anlenkpunkt, Durchgangsbohrung
- 79: Griff
- 8: Erste, zweite Säule
- 81: Träger
- 811: Außenwand
- 812: Frontwand
- 82: Innenwand
- 821,822: Ausleger
- 823: Befestigungsblech
- 83: Rückwand
- 84: Unterwand
- 85: Verstärkungsblech
- 86: Versatzkante
- 9, 9': Verstärkungswand, Verstärkungsblech
- 931, 932: Erster Anlenkpunkt, Durchgangsbohrung
- 941 - 943: Erste / zweite Aussparung, Langloch
- 951, 952: Einbuchtung
- 962: Zweiter Anlenkpunkt, Durchgangsbohrung
- 97: Anlenkmittel, Zapfen
- 98: Schrauben
- FR: Fahrtrichtung
- I: Erstes Positioniermodul
- II: Zweites Positioniermodul
- S: Spalt
- L: Linie
- V: Vorderseite

## Patentansprüche

1. Selbstfahrender Mähdrescher (2) mit einem Gehäuse (1) beinhaltend eine Gehäusewand (7), wobei das Gehäuse (1) ein Trommelhaus (1) für ein Dreschwerk (6) des selbstfahrenden Mähdreschers (2) ist, wobei
• der selbstfahrende Mähdrescher (2) vom Typ einer Schüttlermaschine ist, wobei das erste Förderungs- und/oder Verarbeitungsaggregat (63, 63') eine Abscheidetrommel (63) und das erste Bodensegment ein Korbbodensegment (65) ist, oder
• der selbstfahrende Mähdrescher (2) vom Typ einer Axialrotormaschine, insbesondere eine Hybridmaschine, ist, wobei das erste Förderungs- und/oder Verarbeitungsaggregat (63, 63') eine Zuführtrommel (63') und das erste Bodensegment ein Einlaufbodensegment (67) ist,
wobei die Gehäusewand (7) zumindest eine erste Durchgangsöffnung (721) aufweist, durch die ein erstes Förderungs- und/oder Verarbeitungsaggregat (63, 63') des Mähdreschers (2) entnehmbar ist,
**dadurch gekennzeichnet, dass**
sie ein erstes Positioniermodul (I) mit zumindest zwei ersten Anlenkpunkten (731, 732) aufweist, von denen in Abhängigkeit von dem Typ des Mähdreschers (2)
• zumindest einer zum Befestigen von Komponenten (501 - 507) einer Verstellmechanik (5) für ein erstes Bodensegment (65, 67), und/oder
• einer zum Anordnen eines zweiten, dem ersten nachgeordneten Förderungs- und/oder Verarbeitungsaggregates (4, 401) des Mähdreschers (2) wählbar ist.

2. Selbstfahrender Mähdrescher (2) nach Anspruch 1, **dadurch gekennzeichnet, dass** das erste Positioniermodul (I) zudem zumindest eine erste Aussparung (741 - 742) umfasst, die zum Durchführen eines Verbindungsmittels, insbesondere eines Antriebs, eines Abtriebs oder eines Lagermittels (541 - 543), der Verstellmechanik (5) vorgesehen ist.

3. Selbstfahrender Mähdrescher (2) nach einem der vorhergehenden Ansprüche, **dadurch gekennzeichnet, dass** die ersten Anlenkpunkte (731, 732) und die ersten Aussparungen (741 - 742) zumindest teilweise zum Anordnen der Verstellmechanik (5), insbesondere eines ersten Verstellteils (51) der Verstellmechanik (5), insbesondere zum Verstellen des ersten Bodensegmentes (65, 67) oder Teilen des ersten Bodensegmentes (65, 67), vorgesehen sind.

4. Selbstfahrender Mähdrescher (2) nach einem der vorhergehenden Ansprüche, **dadurch gekennzeichnet, dass** die Gehäusewand (7) ein zweites Positioniermodul (II) mit zweiten Anlenkpunkten (761, 762, 781, 782) und zweiten Aussparungen (743 - 745) zum Anordnen der Verstellmechanik (5), insbesondere eines zweiten Verstellteils (52) der Verstellmechanik (5), insbesondere zum Verstellen eines zweiten Bodensegmentes (64) oder Teilen des zweiten Bodensegmentes (64), aufweist.

5. Selbstfahrender Mähdrescher (2) nach einem der vorhergehenden Ansprüche, **dadurch gekennzeichnet, dass** die Gehäusewand (7) ein Verstärkungsblech (9, 9') umfasst, das in Abhängigkeit von dem Typ des Mähdreschers (2) wählbar und zumindest im Bereich der ersten Anlenkpunkte (731, 732) vorgesehen ist, und das zur Verstärkung der genutzten und/oder zur Abdeckung der ungenutzten Anlenkpunkte (731, 732, 761, 762, 781, 782) und/oder Aussparungen (741 - 745) vorgesehen ist.

6. Selbstfahrender Mähdrescher (2) nach Anspruch 5, **dadurch gekennzeichnet, dass** das Verstärkungsblech (9, 9') die genutzten Anlenkpunkte (931, 932, 961, 962, 981, 982) und/oder Aussparungen (941 - 945) aufweist.

7. Selbstfahrender Mähdrescher (2) nach einem der vorhergehenden Ansprüche, **dadurch gekennzeichnet, dass** die Anlenkpunkte (731, 732, 761, 762, 781, 782, 931, 932, 961, 962, 981, 982) zum Befestigen von Anlenkmitteln, insbesondere von Zapfen (97), vorgesehen sind.

8. Selbstfahrender Mähdrescher (2) nach einem der vorhergehenden Ansprüche, **dadurch gekennzeichnet, dass** die Gehäusewand (7) einen insbesondere zweiteiligen Deckel (70, 701, 702) zum Verschließen der ersten Durchgangsöffnung (721) umfasst, in dem eine Ausnehmung (713), insbesondere in einem oberen Teil (701) des Deckels (70), zum Lagern des ersten Förderungs- und/oder Verarbeitungsaggregates (63, 63') angeordnet ist.

9. Selbstfahrender Mähdrescher (2) nach einem der vorhergehenden Ansprüche, **dadurch gekennzeichnet, dass** in der Gehäusewand (7) weitere Ausnehmungen (711, 712) zum Lagern weiterer, insbesondere dem ersten Förderungs- und/oder Verarbeitungsaggregat (63, 63') vorgeordneter, Förderungs- und/oder Verarbeitungsaggregate (61, 62) des Mähdreschers (2) vorgesehen sind.

10. Selbstfahrender Mähdrescher (2), insbesondere nach einem der vorhergehenden Ansprüche, **dadurch gekennzeichnet, dass** an einer Frontseite der Gehäusewand (7) eine Säule (8) zur Versteifung des Gehäuses (1) vorgesehen ist,
**dadurch gekennzeichnet, dass**
die Säule (8) eine einstückig gefertigte Innenwand (82) mit zwei voneinander beabstandeten Auslegern (821, 822) zur Anbindung eines Einzugkanals (32) des Mähdreschers (2) aufweist.

11. Selbstfahrender Mähdrescher (2) nach Anspruch 10, **dadurch gekennzeichnet, dass** die Säule (8) einen einstückig gefertigten, abgekanteten Träger (81) umfasst.

12. Selbstfahrender Mähdrescher (2) nach einem der vorherigen Ansprüche, **dadurch gekennzeichnet, dass** die Gehäusewand (7) eine erste Seitenwand des Gehäuses (1) bildet, und das Gehäuse (1) eine der Gehäusewand (7) gegenüber liegende zweite Seitenwand (13) umfasst, wobei an einer Frontseite der zweiten Seitenwand (13) ebenfalls eine Säule (8) zur Versteifung des Gehäuses (1) vorgesehen ist, die die einstückig gefertigte Innenwand (82) mit den beiden Auslegern (821, 822) zur Anbindung des Einzugkanals (32) sowie den einstückig gefertigten, abgekanteten Träger (81) aufweist.

13. Selbstfahrender Mähdrescher (2) nach einem der vorherigen Ansprüche, **dadurch gekennzeichnet, dass**
das erste Bodensegment (65, 67) oder Teile des ersten Bodensegmentes (65, 67) dem Gehäuse (1), insbesondere durch die erste Durchgangsöffnung (721), entnehmbar ist oder sind.

## Claims

1. A self-propelled combine harvester (2) with a housing (1) containing a housing wall (7), wherein the housing (1) is a drum housing (1) for a threshing assembly (6) of the self-propelled combine harvester (2), wherein
• the self-propelled combine harvester (2) is of the shaker machine type, wherein the first conveying and/or processing assembly (63, 63') is a separating drum (63) and the first floor segment is a concave floor segment (65), or
• the self-propelled combine harvester (2) is of the axial flow machine type, in particular a hybrid machine, wherein the first conveying and/or processing assembly (63, 63') is a feed drum (63') and the first floor segment is an inflow floor segment (67),
wherein the housing wall (7) has at least one first through opening (721) through which a first conveying and/or processing assembly (63, 63') of the combine harvester (2) can be removed,
**characterized in that**
it has a first positioning module (I) with at least two first articulation points (731, 732) of which, depending on the type of combine harvester (2),
• at least one can be selected for securing components (501 - 507) of an adjustment mechanism (5) for a first floor segment (65, 67), and/or
• one can be selected in order to dispose a second conveying and/or processing assembly (4, 401) of the combine harvester (2) downstream of the first conveying and/or processing assembly.

2. The self-propelled combine harvester (2) according to claim 1, **characterized in that** the first positioning module (I) additionally comprises at least one first recess (741 - 742) which is provided for the passage of a connection means, in particular for a drive, a power take-off or a mounting means (541 - 543) of the adjustment mechanism (5).

3. The self-propelled combine harvester (2) according to one of the preceding claims, **characterized in that** the first articulation points (731, 732) and the first recesses (741 - 742) are provided in order to position the adjustment mechanism (5), in particular of a first adjustment part (51) of the adjustment mechanism (5), in particular in order to adjust the first floor segment (65, 67) or parts of the first floor segment (65, 67).

4. The self-propelled combine harvester (2) according to one of the preceding claims, **characterized in that** the housing wall (7) has a second positioning module (II) with second articulation points (761, 762, 781, 782) and second recesses (743 - 745) in order to position the adjustment mechanism (5), in particular of a second adjustment part (52) of the adjustment mechanism (5), in particular in order to adjust a second floor segment (64) or parts of the second floor segment (64).

5. The self-propelled combine harvester (2) according to one of the preceding claims, **characterized in that** the housing wall (7) comprises a reinforcing plate (9, 9') which can be selected as a function of the type of combine harvester (2) and is provided in at least the region of the first articulation points (731, 732), and which is provided in order to reinforce the articulation points which are used and/or in order to cover the articulation points (731, 732, 761, 762, 781, 782) and/or recesses (741 - 745) which are not used.

6. The self-propelled combine harvester (2) according to claim 5, **characterized in that** the reinforcing plate (9, 9') has the articulation points (931, 932, 961, 962, 981, 982) and/or recesses (941 - 945) which are used.

7. The self-propelled combine harvester (2) according to one of the preceding claims, **characterized in that** the articulation points (731, 732, 761, 762, 781, 782, 931, 932, 961, 962, 981, 982) are provided in order to secure articulation means, in particular studs (97).

8. The self-propelled combine harvester (2) according to one of the preceding claims, **characterized in that** the housing wall (7) comprises a cover (70, 701, 702), which in particular is in two parts, for closing the first through opening (721), in which cover a recess (713), in particular in an upper part (701) of the cover (7), is disposed in order to mount the first conveying and/or processing assembly (63, 63').

9. The self-propelled combine harvester (2) according to one of the preceding claims, **characterized in that** further recesses (711, 712) are provided in the housing wall (7) in order to mount further conveying and/or processing assemblies (61, 62) of the combine harvester (2) which are in particular upstream of the first conveying and/or processing assembly (63, 63').

10. The self-propelled combine harvester (2) according to one of the preceding claims, **characterized in that** a column (8) for stiffening the housing (1) is provided on a front side of the housing wall (7),
**characterized in that**
the column (8) has an inner wall (82) which has been made in one piece with two extension arms (821, 822) which are at a distance from each other in order to attach an intake channel (32) of the combine harvester (2).

11. The self-propelled combine harvester (2) according to claim 10, **characterized in that** the column (8) comprises a support (81) which has been made in one piece and which has been bent.

12. The self-propelled combine harvester (2) according to one of the preceding claims, **characterized in that** the housing wall (7) forms a first side wall of the housing (1) and the housing (1) comprises a second side wall (13) which is positioned opposite the housing wall (7), wherein a column (8) is also provided on a front side of the second side wall (13) in order to stiffen the housing (1), the column having the inner wall (82) which has been made in one piece with the two extension arms (821, 822) in order to attach the intake channel (32) as well as the support (81) which has been made in one piece and which has been bent.

13. The self-propelled combine harvester (2) according to one of the preceding claims, **characterized in that**
the first floor segment (65, 67) or parts of the first floor segment (65, 67) can be removed from the housing (1), in particular through the first through opening (721).

## Revendications

1. Moissonneuse-batteuse automotrice (2) comprenant un carter (1) contenant une paroi de carter (7), le carter (1) étant une cage à tambours (1) pour un système de battage (6) de la moissonneuse-batteuse automotrice (2),
• la moissonneuse-batteuse automotrice (2) étant du type d'une machine à secoueurs, le premier organe de convoyage et/ou de traitement (63, 63') étant un tambour de séparation (63) et le premier segment de fond étant un segment de fond de contre-batteur (65), ou
• la moissonneuse-batteuse automotrice (2) étant du type d'une machine à rotor axial, en particulier une machine hybride, le premier organe de convoyage et/ou de traitement (63, 63') étant un tambour d'amenée (63') et le premier segment de fond étant un segment de fond d'entrée (67),
la paroi de carter (7) comportant au moins une première ouverture traversante (721) à travers laquelle un premier organe de convoyage et/ou de traitement (63, 63') de la moissonneuse-batteuse (2) peut être retiré,
**caractérisée en ce qu'**
elle comporte un premier module de positionnement (I) avec au moins deux premiers points d'articulation (731, 732) parmi lesquels peuvent être choisis, en fonction du type de la moissonneuse-batteuse (2),
• au moins un pour fixer des composants (501-507) d'un mécanisme de réglage (5) pour un premier segment de fond (65, 67) et/ou
• un pour disposer un second organe de convoyage et/ou de traitement (4, 401) de la moissonneuse-batteuse (2) disposé en aval du premier.

2. Moissonneuse-batteuse automotrice (2) selon la revendication 1, **caractérisée en ce que** le premier module de positionnement (I) inclut en outre au moins un premier évidement (741-742) qui est prévu pour le passage d'un moyen de liaison, en particulier d'un moyen menant, d'un moyen mené ou d'un moyen de palier (541-543), du mécanisme de réglage (5).

3. Moissonneuse-batteuse automotrice (2) selon une des revendications précédentes, **caractérisée en ce que** les premiers points d'articulation (731, 732) et les premiers évidements (741-742) sont prévus au moins en partie pour monter le mécanisme de réglage (5), en particulier une première pièce de réglage (51) du mécanisme de réglage (5), en particulier pour le réglage du premier segment de fond (65, 67) ou de pièces du premier segment de fond (65, 67).

4. Moissonneuse-batteuse automotrice (2) selon une des revendications précédentes, **caractérisée en ce que** la paroi de carter (7) comporte un second module de positionnement (II) avec des seconds points d'articulation (761, 762, 781, 782) et des seconds évidements (743-745) pour monter le mécanisme de réglage (5), en particulier une seconde pièce de réglage (52) du mécanisme de réglage (5), en particulier pour le réglage d'un second segment de fond (64) ou de pièces d'un second segment de fond (64).

5. Moissonneuse-batteuse automotrice (2) selon une des revendications précédentes, **caractérisée en ce que** la paroi de carter (7) inclut une tôle de renfort (9, 9') qui est prévue pour pouvoir être choisie en fonction du type de la moissonneuse-batteuse 2) et au moins dans la zone des premiers points d'articulation (731, 732) et qui est prévue pour le renforcement des points d'articulation utilisés et/ou pour le recouvrement des points d'articulation non utilisés (731, 732, 761, 762, 781, 782) et/ou des évidements (741-745).

6. Moissonneuse-batteuse automotrice (2) selon la revendication 5, **caractérisée en ce que** la tôle de renfort (9, 9') comporte les points d'articulation (931, 932, 961, 981, 982) et/ou les évidements (941-945) utilisés.

7. Moissonneuse-batteuse automotrice (2) selon une des revendications précédentes, **caractérisée en ce que** les points d'articulation (731, 732, 761, 762, 781, 782, 931, 932, 961, 962, 981, 982) sont prévus pour fixer des moyens d'articulation, en particulier des pivots (97).

8. Moissonneuse-batteuse automotrice (2) selon une des revendications précédentes, **caractérisée en ce que** la paroi de carter (7) inclut un couvercle en particulier en deux parties (70, 701, 702) pour fermer la première ouverture traversante (721,) dans lequel un évidement (713) est ménagé, en particulier dans une partie supérieure (701) du couvercle (70), pour l'appui du premier organe de convoyage et/ou de traitement (63, 63').

9. Moissonneuse-batteuse automotrice (2) selon une des revendications précédentes, **caractérisée en ce que** dans la paroi de carter (7) sont prévus d'autres évidements (711, 712) pour l'appui d'autres organes de convoyage et/ou de traitement (61, 62) de la moissonneuse-batteuse (2), en particulier disposés en amont du premier organe de convoyage et/ou de traitement (63, 63').

10. Moissonneuse-batteuse automotrice (2), en particulier selon une des revendications précédentes, **caractérisée en ce que** sur un côté frontal de la paroi de carter (7) est prévue une colonne (8) pour la rigidification du carter (1), **caractérisée en ce que**
la colonne (8) comporte une paroi latérale fabriquée d'un seul tenant (82) avec deux extensions distantes l'une de l'autre (821, 822) pour raccorder un canal d'alimentation (32) de la moissonneuse-batteuse (2).

11. Moissonneuse-batteuse automotrice (2) selon la revendication 10, **caractérisée en ce que** la colonne (8) inclut un support coudé, fabriqué d'un seul tenant (81).

12. Moissonneuse-batteuse automotrice (2) selon une des revendications précédentes, **caractérisée en ce que** la paroi de carter (7) forme une première paroi latérale du carter (1), et le carter (1) inclut une seconde paroi latérale (13) disposée en vis-à-vis de la paroi de carter (7), sur un côté frontal de la seconde paroi latérale (13) étant également prévue une colonne (8) pour la rigidification du carter (1), laquelle comporte la paroi latérale fabriquée d'un seul tenant (82) avec les deux extensions (821, 822) pour raccorder le canal d'alimentation (32) ainsi que le support coudé, fabriqué d'un seul tenant (81).

13. Moissonneuse-batteuse automotrice (2) selon une des revendications précédentes, **caractérisée en ce que** le premier segment de fond (65, 67) ou des parties du premier segment de fond (65, 67) peuvent être retirés du carter (1), en particulier à travers la première ouverture traversante (721).
